# EUROPEAN PATENT APPLICATION

(11) **EP 4 607 202 A1**
(43) Date of publication of application: **27.08.2025**
(21) Application number: 23878385.6
(22) Date of filing: 30.08.2023
(51) Int. Cl.: G01N 35/02, G01N 35/04

(54) **CONTAINER STORAGE DEVICE**

(30) Priority: 18.10.2022 JP 2022166569
(71) Applicant: HITACHI HIGH-TECH CORPORATION, Tokyo 105-6409 (JP)
(72) Inventor: SUGAWARA, Izumi, Tokyo 105-6409 (JP); SASAKI, Shunsuke, Tokyo 105-6409 (JP); CHIDA, Saori, Tokyo 105-6409 (JP); MURAMATSU, Yoshiki, Tokyo 105-6409 (JP); OTA, Yuichiro, Tokyo 105-6409 (JP)
(74) Representative: Strehl & Partner mbB
(86) International application number: PCT/JP2023/031458
(87) International publication number: WO 2024/084831

(57) **Abstract**

A container storage device capable of reducing a burden on a worker related to carry-in and carry-out of a liquid is provided. The container storage device includes a storage unit that stores containers each storing a liquid, and a control unit that controls the storage unit. When a new container is to be carried-in, the control unit performs a control such that a container, which is a carry-out candidate, is selected from the containers stored in the storage unit, the selected container is carried-out, and the new container is carried-in.

## Description

### Technical Field

The present invention relates to a container storage device.

### Background Art

As a technique for managing a liquid such as a quality control sample used for quality control, an automatic analyzer that starts adjustment processing such that the quality control sample can be used at a preset time is disclosed (see PTL 1).

### Citation List

### Patent Literature

PTL 1: JP2015-135282A

### Summary of Invention

### Technical Problem

According to PTL 1, no consideration is given to a burden on a worker related to carry-in and carry-out of the liquid containing the quality control sample.

Therefore, an object of the invention is to provide a container storage device capable of reducing a burden on a worker related to carry-in and carry-out of a liquid.

### Solution to Problem

A container storage device according to an aspect of the invention includes: a storage unit configured to store containers each storing a liquid; and a control unit configured to control the storage unit, in which when a new container is to be carried-in, the control unit performs a control such that a container, which is a carry-out candidate, is selected from the containers stored in the storage unit, the selected container is carried-out, and the new container is carried-in.

### Advantageous Effects of Invention

According to the invention, it is possible to provide a container storage device capable of reducing a burden on a worker related to carry-in and carry-out of a liquid.

### Brief Description of Drawings

[FIG. 1] FIG. 1 is a schematic diagram showing a configuration example of an automatic analysis system according to a first embodiment.
[FIG. 2A] FIG. 2A is a diagram showing an example of a specimen table.
[FIG. 2B] FIG. 2B is a diagram showing an example of a rack table.
[FIG. 3] FIG. 3 is a diagram showing an example of a flow of a quality control process.
[FIG. 4] FIG. 4 is a diagram showing an example of a flow of a process according to the first embodiment.
[FIG. 5A] FIG. 5A is a diagram showing an example of an input request screen of carrying-out conditions.
[FIG. 5B] FIG. 5B is a diagram showing an example of a replenishment request screen for an empty rack.
[FIG. 6] FIG. 6 is a diagram showing an example of a quality control screen.
[FIG. 7] FIG. 7 is a schematic diagram showing a modification of the automatic analysis system according to the first embodiment.
[FIG. 8] FIG. 8 is a diagram showing an example of a flow of a process according to a second embodiment.
[FIG. 9] FIG. 9 is a diagram showing an example of a carry-in request screen of a new specimen.
[FIG. 10] FIG. 10 is a diagram showing an example of a flow of a process according to a third embodiment.

### Description of Embodiments

Hereinafter, preferred embodiments of a container storage device will be described with reference to the accompanying drawings. In the embodiments, a specimen in a liquid to be analyzed by an automatic analysis system will be described. A container storing the liquid includes a specimen container storing the specimen, a reagent bottle storing a reagent, and the like. In the following description and the accompanying drawings, components having the same functional configuration are denoted by the same reference signs, and redundant description thereof is omitted.

### First Embodiment

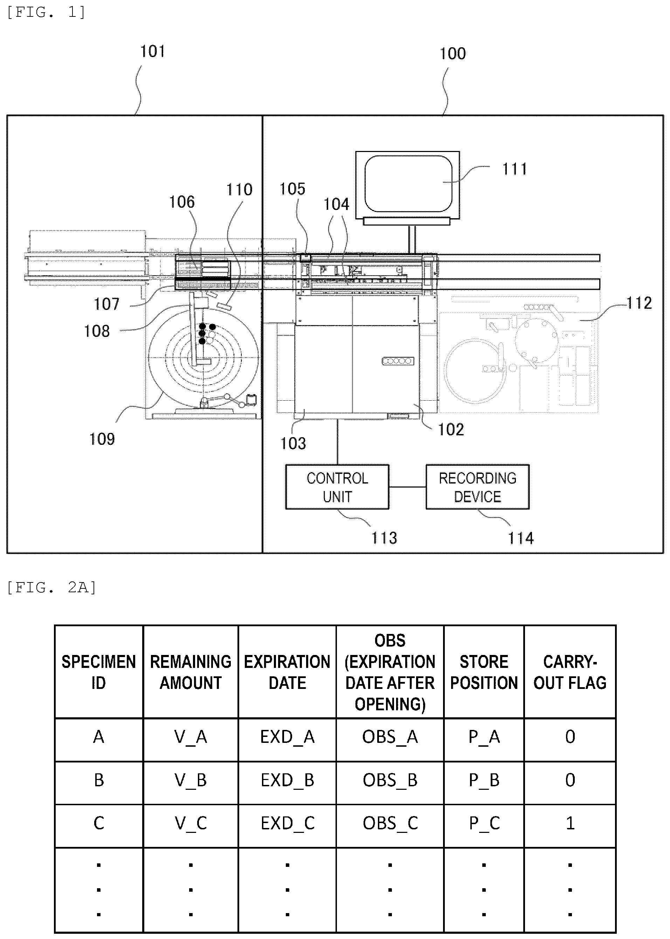

An example of an overall configuration of the automatic analysis system will be described with reference to FIG. 1. The automatic analysis system is a system for analyzing a quality control sample used for quality control and a specimen such as blood or urine supplied from a patient, and includes an automatic analyzer 100 and a container storage device 101. The automatic analyzer 100 includes a specimen carry-in unit 102, a specimen carry-out unit 103, a rack carry line 104, a rack information acquisition unit 105, a detection unit 112, an operation unit 111, a control unit 113, and a recording device 114. The container storage device 101 includes a buffer 106, a rack stop unit 107, a specimen moving mechanism 108, a specimen store module 109, and a specimen information acquisition unit 110. Hereinafter, each unit will be described.

In the specimen carry-in unit 102, a specimen container storing a specimen is carried-in. The specimen container is mounted on a rack, and a worker carries in the specimen container. In the specimen carry-out unit 103, the specimen container mounted on the rack is carried-out. The carried-out specimen container is received by the worker.

The rack carry line 104 is connected to the specimen carry-in unit 102, the specimen carry-out unit 103, the detection unit 112, and the container storage device 101, and carries the rack therebetween. The rack information acquisition unit 105 is provided on the rack carry line 104 and reads an identifier given to the rack, for example, a barcode attached to the rack.

The detection unit 112 includes a photomultiplier tube, a light source lamp, a spectrometer, and a photodiode, and measures the specimen. The detection unit 112 may have a function of adjusting an internal temperature.

The operation unit 111 includes, for example, a display, a touch panel, a mouse, or a keyboard, and is used to input an instruction from the worker related to carry-in, carry-out, and measurement of the specimen, and displays data related to the carry-in and carry-out of the specimen and a measurement result. The control unit 113 controls each unit according to an instruction received by the operation unit 111 and various programs read from the recording device 114. The recording device 114 records various programs and data related to carry-in, carry-out, and measurement of the specimen.

An empty rack used for carrying the specimen container is stored in the buffer 106. At least one empty rack is stored in the buffer 106 so as not to hinder the carrying of the specimen container. When carry-out of the specimen container is requested, the specimen container is mounted on the empty rack stored in the buffer 106, and the rack on which the specimen container is mounted is carried-out to the specimen carry-out unit 103. A rack used for carrying-in the specimen container is stored in the buffer 106 after carrying-in the specimen container, and is used for carrying-out another specimen container.

The rack stop unit 107 is provided on the rack carry line 104, and is a space where the specimen container is loaded onto and unloaded from the rack. That is, the specimen container is unloaded from the rack carried from the specimen carry-in unit 102 to the rack stop unit 107, or the specimen container is loaded onto the rack stopped at the rack stop unit 107. The loading and unloading of the specimen container at the rack stop unit 107 is performed by the specimen moving mechanism 108.

The specimen moving mechanism 108 moves the specimen container dropped from the rack into the specimen store module 109, and loads the specimen container in the specimen store module 109 onto the rack stopped at the rack stop unit 107.

The specimen store module 109 is provided with a plurality of store spaces where specimen containers are stored. In order to keep a temperature of the specimen stored in the specimen container constant, the specimen store module 109 includes a temperature adjustment mechanism. When the number of store spaces of the specimen store module 109 is M and the number of specimen containers stored in the specimen store module 109 is N, there are M - N empty spaces in the specimen store module 109.

The specimen information acquisition unit 110 is provided on a movement path of the specimen moving mechanism 108, and reads an identifier given to the specimen container stored in or retrieved from the specimen store module 109, for example, a barcode attached to the specimen container. Data related to the specimen is associated with the identifier of each specimen container.

An example of a specimen table in which the identifier of the specimen container and the data related to the specimen are associated with each other will be described with reference to FIG. 2A. The specimen table shown in FIG. 2A includes columns of a specimen ID, a remaining amount, an expiration date, an OBS, a store position, and a carry-out flag, and is recorded in the recording device 114.

The identifier of the specimen container is recorded in the specimen ID column. An amount of the specimen remaining in the specimen container is recorded in the remaining amount column. An expiration date until which the specimen stored in the specimen container is usable is recorded in the expiration date column. An expiration date until which the specimen is usable after the specimen container is opened is recorded in the on board stability (OBS) column. A position in the specimen store module 109 in which the specimen container is stored is recorded in the store position column. A flag indicating that the specimen container is a candidate to be carried-out is recorded in the carry-out flag column. That is, FIG. 2A shows that a specimen container with a specimen ID of C is a candidate to be carried-out, which has a remaining amount of V_C, an expiration date of EXD_C, an OBS of OBS_C, and a store position of P_C. The identifier of each rack may be associated with data related to the rack.

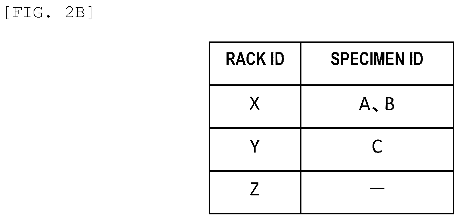

An example of a rack table in which the identifier of the rack and the data related to the rack are associated with each other will be described with reference to FIG. 2B. The rack table shown in FIG. 2B includes columns of a rack ID and a specimen ID, and is recorded in the recording device 114. The identifier of the rack is recorded in the rack ID column. The identifier of the specimen container mounted on the rack is recorded in the specimen ID column.

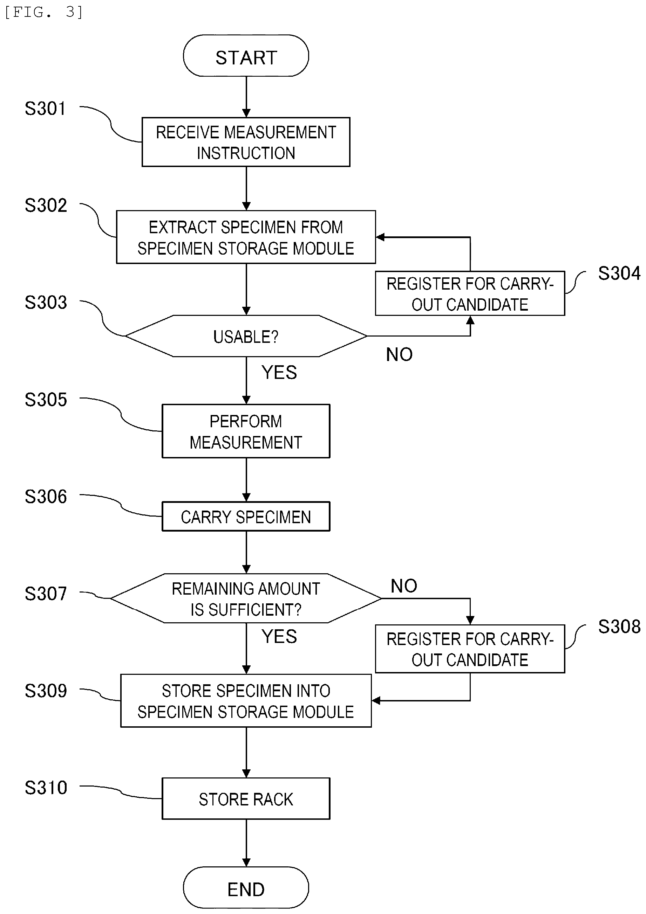

An example of a flow of a quality control process will be described for each step with reference to FIG. 3.

### (S301)

The control unit 113 receives a measurement instruction input by the worker via the operation unit 111.

### (S302)

The control unit 113 controls the specimen moving mechanism 108 to extract the specimen container from the specimen store module 109.

### (S303)

The control unit 113 determines whether the specimen contained in the specimen container extracted in S302 is usable. If the specimen is unusable, the process returns to S302 via S303, and if the specimen is usable, the process proceeds to S305.

Whether the specimen is usable is determined based on, for example, the data recorded in the specimen table in FIG. 2A. That is, when the remaining amount associated with the identifier of the specimen container read by the specimen information acquisition unit 110 is less than an amount required for measurement or exceeds the expiration date or the OBS, it is determined that the specimen is unusable.

### (S304)

The control unit 113 registers the specimen container determined to be unusable in S303 as a carry-out candidate. The registration for the carry-out candidate is performed by, for example, recording 1 in the carry-out flag in the specimen table in FIG. 2A. When the registration for the carry-out candidate is completed, the specimen container that is not extracted yet is extracted S302.

### (S305)

The control unit 113 causes the detection unit 112 to measure the specimen determined to be usable in S303. More specifically, the specimen container containing the usable specimen is mounted onto the rack stopped at the rack stop unit 107 by the specimen moving mechanism 108, and is carried to the detection unit 112 by the rack carry line 104.

### (S306)

The control unit 113 carries the specimen container for which the measurement is completed in S305 to the container storage device 101. More specifically, the specimen container after the measurement is carried to the container storage device 101 by the rack carry line 104 while being mounted on the rack used for carrying to the detection unit 112.

### (S307)

The control unit 113 determines whether the remaining amount of the specimen stored in the specimen container carried in S306 is sufficient. If the remaining amount is sufficient, the process proceeds to S309, and if the remaining amount is insufficient, the process proceeds to S309 via S308.

### (S308)

The control unit 113 registers the specimen container determined to have an insufficient remaining amount in S307 as the carry-out candidate. The registration for the carry-out candidate is the same as in S304.

### (S309)

The control unit 113 controls the specimen moving mechanism 108 to store the specimen container carried in S306 in the specimen store module 109.

### (S310)

The control unit 113 causes the buffer 106 to store the rack used for carrying the specimen container in S306.

According to the flow of the process described with reference to FIG. 3, a quality control is performed, and the specimen container determined to be unusable is registered as the carry-out candidate. When the specimen store module 109 is filled with a large number of specimen containers that are carry-out candidates, it is difficult to store a certain number of usable specimen containers, and thus it is desirable to carry-out the specimen containers that are the carry-out candidates at an appropriate time. Since carry-in and carry-out of the specimen are performed by the worker, for example, when a new specimen container is to be carried-in, a burden on the worker is reduced if the specimen container that is the carry-out candidate is carried-out.

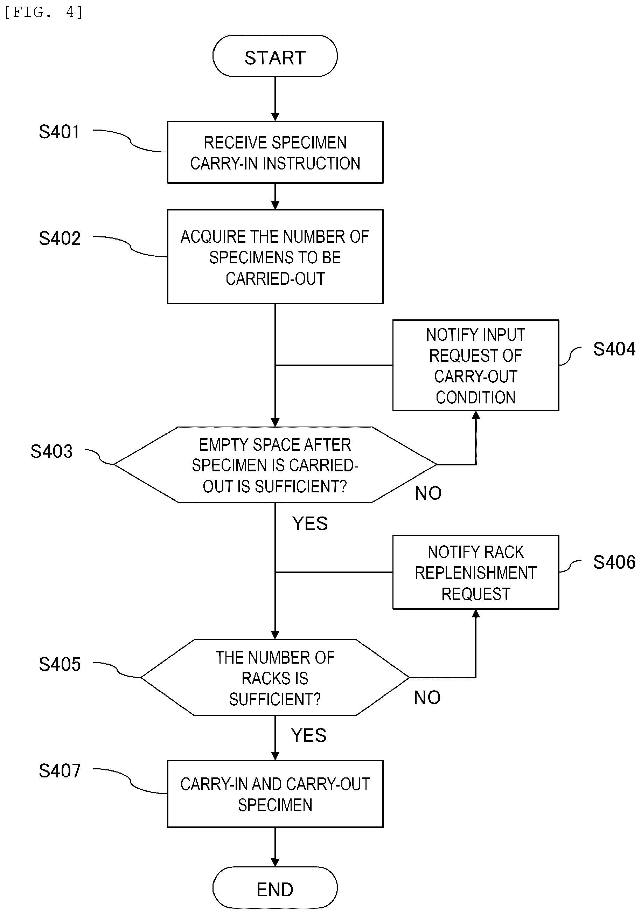

With reference to FIG. 4, as an example of a flow of a process according to the first embodiment, how the unusable specimen container is carried-out when a new specimen container is to be carried-in will be described for each step.

### (S401)

The control unit 113 receives a specimen carry-in instruction input by the worker via the operation unit 111. The worker operates the operation unit 111 after carrying a rack on which the new specimen container is mounted into the specimen carry-in unit 102. The rack on which the new specimen container is mounted is carried to the rack information acquisition unit 105 by the rack carry line 104, and an identifier of the rack is read by the rack information acquisition unit 105.

### (S402)

The control unit 113 acquires the number of specimens to be carried-out. For example, the number of specimens for which the carry-out flag is recorded in the specimen table shown in FIG. 2A is counted.

### (S403)

The control unit 113 determines whether the empty spaces in the specimen store module 109 after the specimen container is carried-out are sufficient. If the empty spaces are insufficient, the process returns to S403 via S404, and if the empty spaces are sufficient, the process proceeds to S405.

Whether the empty spaces in the specimen store module 109 after the specimen container is carried-out are sufficient is determined based on the number of specimen containers to be newly carried-in. That is, when the number of empty spaces after carry-out is equal to or larger than the number of specimen containers to be newly carried-in, it is determined that the empty places are sufficient, and when the number of empty places is smaller than the number of specimen containers to be carried-in, it is determined that the empty places are insufficient.

### (S404)

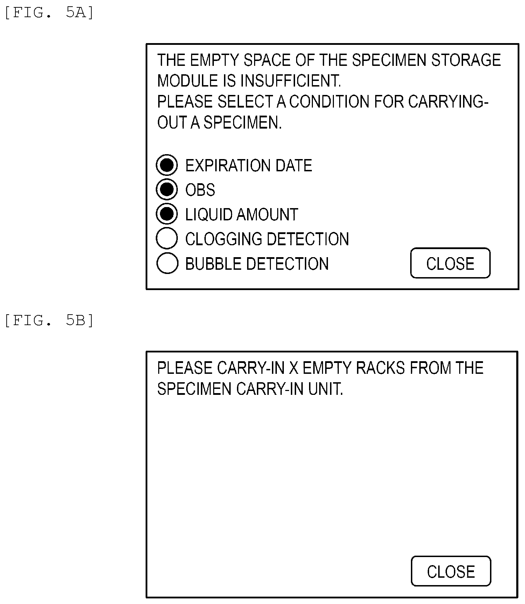

The control unit 113 notifies the worker of an input request of carry-out conditions. That is, when the empty spaces are insufficient, the specimen container to be newly carried-in cannot be stored in the specimen store module 109, and thus the worker is requested to input the carry-out conditions that are conditions for extracting a specimen container to be additionally carried-out. FIG. 5A shows an example of a screen for notifying the input request of the carry-out conditions. When the carry-out conditions are received, in S403, determination is performed regarding the empty spaces in the specimen store module 109 after the specimen container is carried-out again.

### (S405)

The control unit 113 determines whether the number of empty racks stored in the container storage device 101 is sufficient. If the number of empty racks is insufficient, the process returns to S405 via S406, and if the number of empty racks is sufficient, the process proceeds to S407.

Whether the number of empty racks stored in the container storage device 101 is sufficient is determined based on a predetermined threshold. That is, when the number of racks is equal to or larger than the threshold, it is determined that the number of racks is sufficient, and when the number of racks is smaller than the threshold, it is determined that the number of racks is insufficient. The threshold may be, for example, 1, which is a minimum number for not hindering carrying of the specimen container, or may be a maximum number that can be stored in the container storage device 101. If the threshold is the maximum number, a risk that carrying of the specimen container is stopped can be minimized.

### (S406)

The control unit 113 notifies the worker of an empty rack replenishment request. That is, when the number of empty racks is insufficient, the worker is requested to replenish empty racks since the carrying of the specimen container is hindered. FIG. 5B shows an example of a screen for notifying the empty rack replenishment request. When an empty rack is replenished in response to the replenishment request, the number of empty racks is determined again in S405.

### (S407)

The control unit 113 causes the specimen containers to be carried-in and carried-out. More specifically, after a detection container that is the carry-out candidate or a detection container satisfying the carry-out conditions is mounted on the rack supplied from the buffer 106 and carried-out, the specimen container instructed in S401 is carried-in, and a rack used for the carry-in is stored in the buffer 106.

When there are a plurality of racks used to carry-in specimen containers, the racks used for carrying-in may be used to carry-out the detection container that is the carry-out candidate or the detection container satisfying the carry-out conditions. Since the racks used for carrying-in are used for carrying-out, it is not necessary to reduce the number of empty racks stored in the container storage device 101.

According to the flow of the process described with reference to FIG. 4, when the new specimen container is carried-in, the unusable specimen container is carried-out, and thus the burden on the worker related to carry-in and carry-out of the specimen is reduced. When the flows of the processes in FIGS. 3 and 4 are executed, a screen related to an operation may be displayed at the operation unit 111.

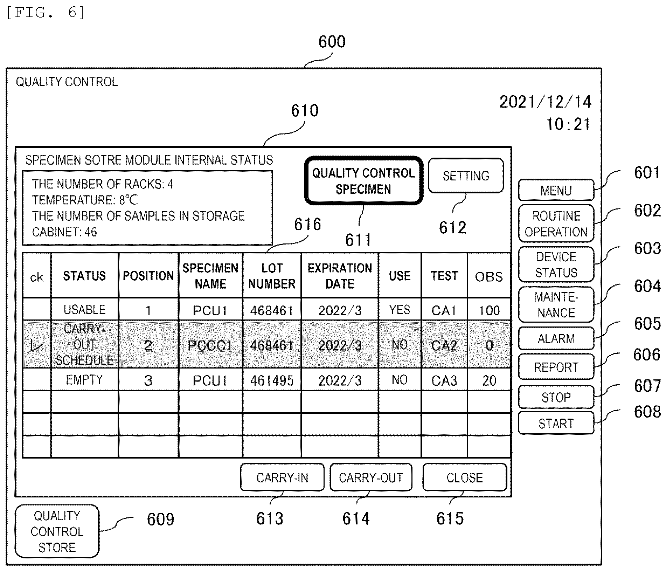

A quality control screen 600, which is an example of a screen related to the quality control, will be described with reference to FIG. 6. The quality control screen 600 includes a menu button 601, a routine operation button 602, a device status button 603, a maintenance button 604, an alarm button 605, a report button 606, a stop button 607, a start button 608, and a quality control store button 609.

The menu button 601 is pressed to display a screen related to a menu. The routine operation button 602 is pressed to display a screen related to a routine operation. The device status button 603 is pressed to display a screen related to a device status. The maintenance button 604 is pressed to display a screen related to maintenance. The alarm button 605 is pressed to display a screen related to an alarm. The report button 606 is pressed to display a screen related to a report. The stop button 607 is pressed to instruct stopping of an operation. The start button 608 is pressed to start an operation such as an analysis process. The quality control store button 609 is pressed to display a specimen store module internal status screen 610.

The specimen store module internal status screen 610 includes a quality control specimen button 611, a setting button 612, a carry-in button 613, a carry-out button 614, and a close button 615. The quality control specimen button 611 is pressed to display a specimen information table 616. The setting button 612 is pressed to set the carry-out conditions. The carry-in button 613 is pressed to instruct carry-in of the specimen. The carry-out button 614 is pressed to instruct carry-out of the specimen. The close button 615 is pressed to close the specimen store module internal status screen 610.

The specimen information table 616 includes columns of ck, status, position, specimen name, lot number, expiration date, use, test, and OBS. The ck column is a check box and is checked when a corresponding row is selected. A status of the specimen is displayed in the status column. The store position of the specimen is displayed in the position column. A name of the specimen is displayed in the specimen name column. A lot number of the specimen is displayed in the lot number column. The expiration date of the specimen is displayed in the expiration date column. Whether the specimen is usable is displayed in the use column. A test item of the specimen is displayed in the test column. The expiration date after the specimen container is opened is displayed in the OBS column. In the specimen information table 616 in FIG. 6, a specimen in a second row is checked as being scheduled to be carried-out, and when the carry-out button 614 is pressed, a carry-out instruction is issued.

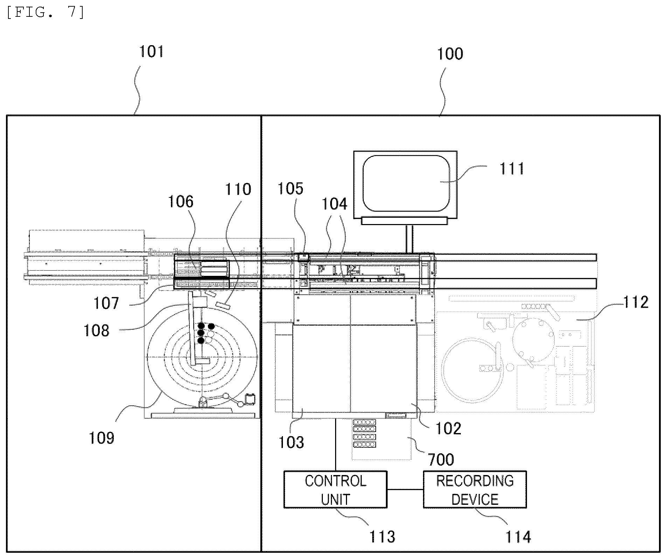

When there are a large number of racks on which specimen containers to be carried-in are mounted, the large number of racks may be allowed to stand by in front of the specimen carry-in unit 102. FIG. 7 shows an automatic analysis system in which a specimen standby unit 700 is provided in front of the specimen carry-in unit 102. The specimen standby unit 700, which is a difference from FIG. 1, will be described.

The specimen standby unit 700 stores the large number of racks on which the specimen containers to be carried in are mounted, and sequentially carries the large number of racks into the specimen carry-in unit 102. In order to keep the temperature of the specimen stored in the specimen container constant, the specimen standby unit 700 includes a temperature adjustment mechanism. Further, a barcode reader, a camera, or the like may be provided at the specimen standby unit 700. By providing the barcode reader or the camera, the number of racks stored in the specimen standby unit 700 and a type of the specimen in the specimen containers mounted on the rack can be recorded in the recording device 114. Further, whether there is any unusable specimen container may be determined based on the data recorded in the recording device 114.

### Second Embodiment

In the first embodiment, it has been described that the unusable specimen container is carried-out in synchronization with the specimen carry-in instruction by the worker. The synchronization of the carry-out and carry-in of the specimen is not limited to that in the first embodiment. In a second embodiment, description will be given of a case where an automatic analysis system that checks a specimen to be carried-out notifies a request to carry in a new specimen. A difference from the first embodiment is a flow of a process, and thus other description will be omitted.

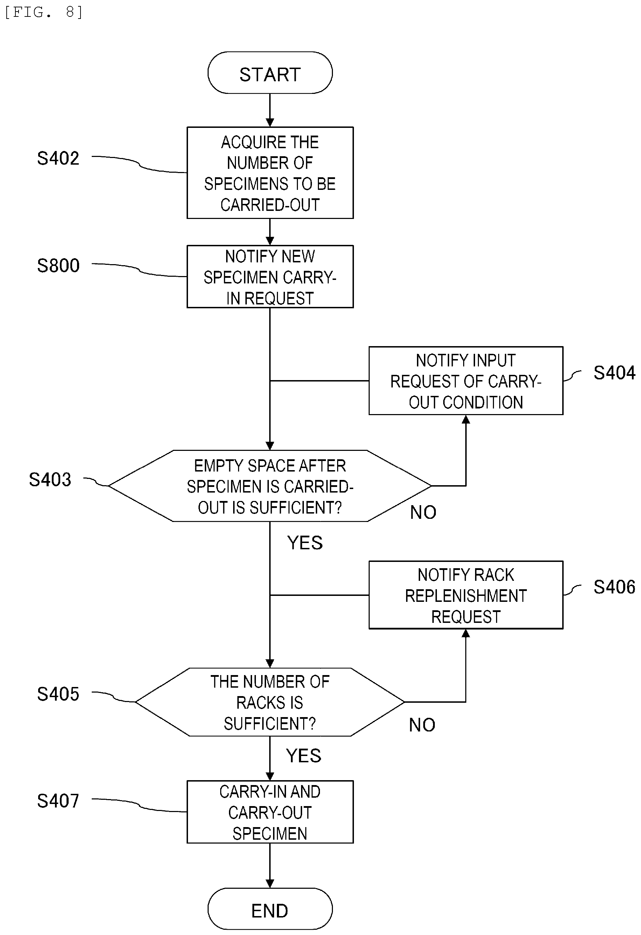

A flow of a process according to the second embodiment will be described for each step with reference to FIG. 8.

### (S402)

As in the first embodiment, the control unit 113 acquires the number of specimens to be carried-out.

### (S800)

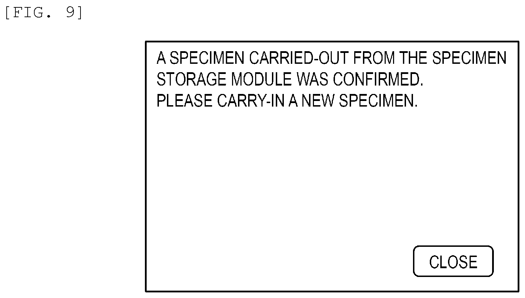

The control unit 113 notifies the worker of a new specimen carry-in request. That is, in order to carry-in the new specimen container in synchronization with carry-out of the unusable specimen container, the worker is requested to carry-in the new specimen. FIG. 9 shows an example of a screen for notifying the new specimen carry-in request. When the worker inputs the specimen carry-in instruction via the operation unit 111, the process of S403 and subsequent processes are executed.

### (S403 to S407)

As in the first embodiment, the control unit 113 checks the number of empty spaces and racks in the specimen store module 109, and then causes the specimen container to be carried-out and carried-in.

According to the flow of the process described with reference to FIG. 8, when the unusable specimen container is carried-out, the new specimen container is carried-in, and thus the burden on the worker related to carry-in and carry-out of the specimen is reduced. By issuing the new specimen carry-in request at an appropriate time, the worker will not forget to insert the new specimen. Further, since a certain number of usable specimens are stored in the automatic analysis system, automation of analysis is not hindered.

### Third Embodiment

In the first embodiment and the second embodiment, the flows of the processes of using the specimen carry-in instruction by the worker as a trigger have been described. In a third embodiment, a flow of a process in which a specimen carry-out instruction by the worker is used as the trigger will be described. A difference from the first embodiment and the second embodiment is the flow of the process, and thus other description will be omitted.

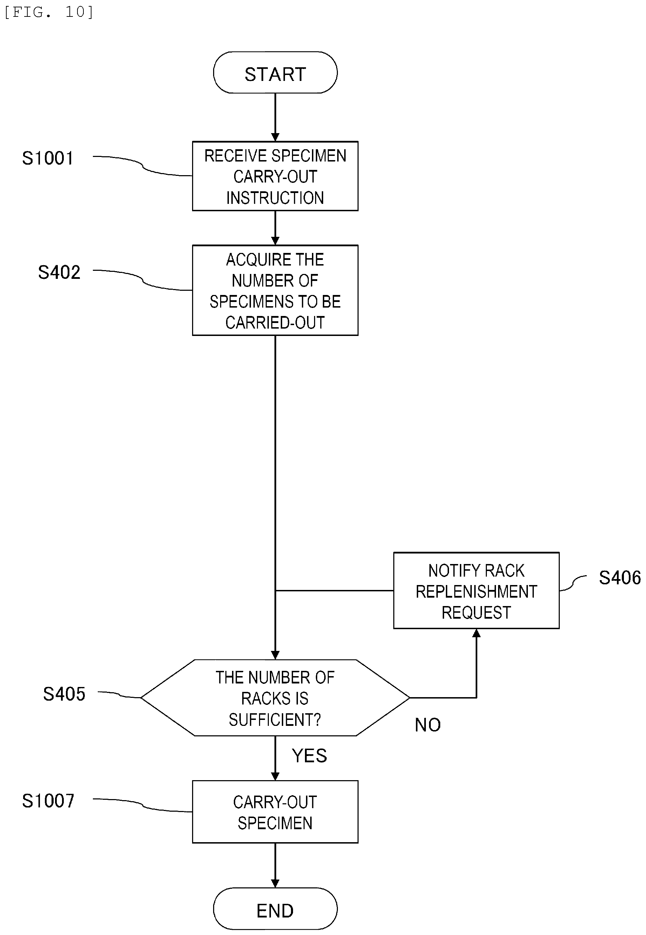

The flow of the process according to the third embodiment will be described for each step with reference to FIG. 10.

### (S1001)

The control unit 113 receives the specimen carry-out instruction input by the worker via the operation unit 111. The specimen carry-out instruction is performed, for example, by selecting the specimen in the specimen information table 616 on the quality control screen 600 in FIG. 6 and pressing the carry-out button 614.

### (S402)

As in the first embodiment, the control unit 113 acquires the number of specimens to be carried-out.

### (S405 and S406)

As in the first embodiment, the control unit 113 checks the number of empty racks stored in the container storage device 101, and notifies the replenishment request if the empty racks are insufficient.

### (S1007)

The control unit 113 causes the specimen container to be carried-out. More specifically, the specimen container for which the carry-out instruction is issued in S1001 and the detection container that is the carry-out candidate are mounted on the rack supplied from the buffer 106 and carried-out. The specimen container for which the carry-out instruction is issued and the detection container that is the carry-out candidate may be carried-out on the same rack or may be carried out on different racks. When the specimen containers are carried out on the same rack, a time required for carrying-out the specimen containers can be shortened. When the specimen containers are carried-out on different racks, it is easy to distinguish between the specimen container for which the carry-out instruction is issued and the detection container that is the carry-out candidate.

According to the flow of the process described with reference to FIG. 10, when the specimen container for which the carry-out instruction is issued by the worker is carried-out, the specimen container that is the carry-out candidate is also carried-out, and thus the burden on the worker related to carry-out of the specimen is reduced. In addition, since the specimen container is automatically carried-out, the worker does not need to stand by in the vicinity of the specimen carry-out unit 103, and the process accompanying the carry-out of the specimen can be performed at any timing.

A plurality of embodiments of the invention have been described above. The invention is not limited to the above-described embodiments, and the components may be modified without departing from the gist of the invention. A plurality of components disclosed in the above-described embodiments may be combined as appropriate. Further, a part of components may be deleted from all components disclosed in the above-described embodiments.

### Reference Signs List

100: automatic analyzer
101: container storage device
102: specimen carry-in unit
103: specimen carry-out unit
104: rack carry line
105: rack information acquisition unit
106: buffer
107: rack stop unit
108: specimen moving mechanism
109: specimen store module
110: specimen information acquisition unit
111: operation unit
112: detection unit
113: control unit
114: recording device
600: quality control screen
601: menu button
602: routine operation button
603: device status button
604: maintenance button
605: alarm button
606: report button
607: stop button
608: start button
609: quality control store button
610: specimen store module internal status screen
611: quality control specimen button
612: setting button
613: carry-in button
614: carry-out button
615: close button
616: specimen information table
700: specimen standby unit

## Claims

1. A container storage device comprising:
a storage unit configured to store containers each storing a liquid; and
a control unit configured to control the storage unit, wherein
when a new container is to be carried-in, the control unit performs a control such that a container, which is a carry-out candidate, is selected from the containers stored in the storage unit, the selected container is carried-out, and the new container is carried-in.

2. The container storage device according to claim 1, wherein
when a free space in the storage unit in which the new container is stored is insufficient, the control unit notifies an input request of a carry-out condition, which is a condition for extracting a container to be additionally carried-out.

3. The container storage device according to claim 2, wherein
the carry-out condition includes at least one of an expiration date of the liquid, an expiration date after a container is opened, and a remaining amount of a liquid.

4. The container storage device according to claim 1, further comprising:
a rack storage cabinet configured to store a rack used for carrying the container, wherein
the control unit performs a control such that the selected container is carried-out using the rack.

5. The container storage device according to claim 4, wherein
the control unit performs a control such that a rack used for carrying-in the new container is stored in the rack storage cabinet.

6. The container storage device according to claim 4, wherein
the control unit notifies a rack replenishment request when the number of racks stored in the rack storage cabinet is insufficient.

7. The container storage device according to claim 6, wherein
the control unit determines that the number of racks is insufficient when the number of racks is less than a maximum number of racks storable in the rack storage cabinet.

8. The container storage device according to claim 1, wherein
when there are a plurality of racks used for carrying-in the new container, the control unit performs a control such that the selected container is carried-out using the rack used for carrying-in.

9. The container storage device according to claim 1, wherein
the control unit notifies a new container carry-in request when the container, which is a carry-out candidate, is confirmed.

10. The container storage device according to claim 1 comprising:
a rack storage cabinet configured to store a plurality of racks on which a plurality of the containers are placeable, wherein
when a predetermined number or more of racks placeable on the rack storage cabinet are placed on the rack storage cabinet and a first rack on which a first container is placed is carried-in the storage unit, the control unit performs a control such that a second container that is stored in the storage unit and satisfies a predetermined condition is placed on a second rack among the racks placed on the rack storage cabinet and the second rack is carried-out together with the second container.

11. The container storage device according to claim 10, wherein
the control unit performs a control such that the first rack is placed in the rack storage cabinet and performs a control such that the first container is stored in the storage unit, in parallel with carrying-out the second rack together with the second container.

12. The container storage device according to claim 10, wherein
the predetermined condition indicates that a necessary amount of liquid for analysis is not stored in an analyzer connected to the container storage device, or a period during which the container is stored in the storage unit is longer than a predetermined date and time.

13. The container storage device according to claim 10, wherein
the predetermined number or more of racks indicate a maximum number of racks placeable in the rack storage cabinet.
